Europäisches Patentamt

European Patent Office

Office européen des brevets

(19)

(11)  EP 0 463 333 B1

(12)  **EUROPÄISCHE PATENTSCHRIFT**

(45) Veröffentlichungstag und Bekanntmachung des Hinweises auf die Patenterteilung:
**18.12.1996  Patentblatt 1996/51**

(51) Int. Cl.$^6$: **B29C 59/04**,  B29C 55/26

(21) Anmeldenummer: **91107468.0**

(22) Anmeldetag: **08.05.1991**

(54) **Oberflächenstrukturierte Folie aus thermoplastischem Kunststoff und Verfahren zu ihrer Herstellung**

Thermoplastic film having a surface pattern and method for its fabrication

Feuille thermoplastique avec une surface structurée et procédé pour sa fabrication

(84) Benannte Vertragsstaaten:
**BE DE ES FR GB IT LU NL**

(30) Priorität: **16.05.1990 DE 4015658**

(43) Veröffentlichungstag der Anmeldung:
**02.01.1992  Patentblatt 1992/01**

(73) Patentinhaber: **HOECHST AKTIENGESELLSCHAFT**
**65926 Frankfurt am Main (DE)**

(72) Erfinder: **Hagens, Hajo, Dr.**
**W-6200 Wiesbaden (DE)**

(56) Entgegenhaltungen:
**EP-A- 0 230 633          EP-A- 0 242 165**
**DE-A- 1 504 720          GB-A- 2 104 847**
**US-A- 3 842 152**

• **PATENT ABSTRACTS OF JAPAN vol. 13, no. 105 (C-575)(3453) 13. März 1989 & JP-A-63 278 940 (TORAY INDUSTRIES INC.) 16. November 1988**

Anmerkung:   Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine biaxial streckorientierte und hitzefixierte, transparente Folie aus thermoplastischem Kunststoff, die auf wenigstens einer ihrer Oberflächen eine Oberflächenrauhigkeit ($R_a$) von größer 0,003 µm aufweist. Die Erfindung betrifft auch ein Verfahren zur Herstellung einer solchen Folie.

Bei sehr klaren Folien aus thermoplastischem Kunststoff ist es schon seit langem bekannt, daß diese Folien wegen ihrer besonders glatten Oberflächen eine besonders unerwünschte Neigung zum Verblocken auf der Rolle zeigen. Die DE-A-36 20 511 beschreibt zur Lösung dieses Problems eine Methode, wonach dem Kunststoff, in diesem Fall einem Polyester, inerte Zuschlagstoffe in äußerst feinteiliger Form zugesetzt werden. Durch diese Zusätze bildet sich auf der Folienoberfläche eine Mikrorauhigkeit aus, die für eine extrem dünne Luftschicht zwischen den einzelnen Folienlagen einer Folienrolle verantwortlich ist bzw. für eine Abstandshaltung zwischen den einzelnen Folienlagen sorgt und damit ein Verblocken der Folie verhindert.

Da sich aber bei derartigen Folien die für die Oberflächeneigenschaften verantwortlichen Inertpartikel über die gesamte Folienmasse verteilen, woraus eine gewisse Trübung der Folie resultiert, hat man zur Verbesserung der Transparenz solcher Polyesterfolien Mehrschichtenaufbauten vorgesehen, bei denen die Kernschichten frei sind von Inertpartikel und bei denen nur in den äußeren Schichten inerte Teilchenzusätze mit ganz bestimmter Größenverteilung vorgesehen sind. Derartige Folien sind z.B. in der EP-A-0 260 258 beschrieben. Die US-A-3 842 152 beschreibt eine Folie mit einer Rauhigkeit von 30 bis 50 micro inch (ca. 0,76 bis 12,7 µm). Diese Folien sind jedoch bezüglich ihrer Transparenz (frustrated total reflectance ca. 10 %) nicht akzeptabel. Die EP-A-0 242 165 beschreibt Folien mit unterschiedlichen Morphologien in Deck- und Basisschicht.

Nun ist es aber für bestimmte Anwendungszwecke wünschenswert, insbesondere auf dem reprographischen Sektor, Folien mit noch weiter verbesserter Transparent zu schaffen, wozu jegliche Teilchenzusätze vermieden werden müssen, wobei aber stets wegen der Handhabbarkeit und Schneidbarkeit der Folien eine bestimmte Gleitfähigkeit gewährleistet sein muß.

Aufgabe der vorliegenden Erfindung war es, eine Folie zu schaffen, die neben einer exzellenten Transparenz eine ausreichend große Rauhigkeit aufweist, um eine zufriedenstellende Handhabbarkeit der Folie bei ihrem bestimmungsgemäßen Einsatz jederzeit zu gewährleisten.

Gelöst wird diese Aufgabe durch eine Folie mit den Merkmalen des Anspruchs 1.

Als thermoplastische Polymere sind prinzipiell alle Polymeren geeignet, die sich zu streckorientierten und hitzefixierten Folien verarbeiten lassen. Hierfür kommen neben Polyvinylchlorid, Polyamid und neueren Polymeren wie Polyparaphenylensulfid oder Polyetherester insbesondere Polyolefine wie isotaktisches Polypropylen oder vorzugsweise thermoplastische Polyester in Frage.

Als thermoplastische Polyestermaterialien werden im Rahmen der Erfindung Polyesterhomo- und -copolymere, Gemische verschiedener Polyester sowie Abmischungen oder Blends von Polyestern mit anderen Polymeren angesehen.

Die Herstellung der Polyester kann sowohl nach dem Umesterungsverfahren z. B. mit Hilfe der katalytischen Wirkung von z. B. Zn-, Ca-, Mn-, Li- oder Ge-Salzen als auch nach dem Direktesterverfahren erfolgen.

Beispiele für Polyester sind Mono- oder Polykondensate aus Terephthalsäure oder Isophthalsäure, 2,6-Naphthalindicarbonsäure mit Glykolen mit 2 bis 10 C-Atomen wie Polyethylenterephthalat, Polytetramethylenterephthalat, Polybutylenterephthalat, Poly-1,4-cyclohexylen-dimethylenterephthalat, Polyethylen-2,6-naphthalindicarboxylat oder Polyethylen-p-hydroxybenzoat.

Die Copolyester können als Bausteine auch Adipinsäure, Sebazinsäure, Phthalsäure, Isophthalsäure, 5-Na-sulfoisophthalat, polyfunktionelle Komponenten wie Trimelithsäure u. a. enthalten.

Die Polyestergemische können beispielsweise aus Polyethylenterephthalat und Polybutylenterephthalat oder Polyethylenterephthalat und wenigstens einem Alkalimetallsalz eines Derivats der Sulfonsäure wie z. B. der Sulfoisophthalsäure bestehen.

Beispiele für Polymere, die in den Polyester eingearbeitet oder eingemischt werden können, sind Polyolefinhomo- oder -copolymere wie Polyethylen, Polypropylen, Poly-4-methylpenten, Ethylen-Vinylacetat-Copolymere, die ihrerseits verseift sein können, Ionomere, Polyamide, Polycarbonate, Polytetrafluorethylen, Polysulfone u. a.

Die Oberflächenrauhigkeit der erfindungsgemäßen Folie, gemessen nach DIN 4768 als $R_a$ liegt im Bereich von 0,005 bis 0,080 µm, vorzugsweise im Bereich von 0,007 bis 0,025 µm. Die Oberflächenrauhigkeit wird erfindungsgemäß im wesentlichen durch aus der Folienebene herausragende integrale Erhebungen bestehend aus die Folie bildendem Polymermaterial von im wesentlichen gleichförmiger Konfiguration gebildet. Unter dem Begriff einer »gleichförmigen Konfiguration« soll im Rahmen der vorliegenden Erfindung eine Strukturierung verstanden werden, bei der die einzelnen Strukturelemente nicht unregelmäßig und in rein zufälliger Formgebung nebeneinander angeordnet sind, sondern sie sollen sich in ihren wesentlichen geometrischen Abmessungen, der Form und Lage in der Ebene, der Größe und der Erhebung über die Folienebene hinaus soweit ähnlich sein, daß bei einem unvoreingenommenen Betrachter der Eindruck einer gewissen Regelmäßigkeit entsteht, hervorgerufen durch immer wiederkehrende und als gleich identifizierbare Elementarzellen. Der mittlere Durchmesser $d_m$ der besagten Elementarzellen soll erfindungsgemäß im Bereich von 10 bis 800 $\mu$m liegen, vorzugsweise von 20 bis 300 $\mu$m, wobei der mittlere Durchmesser bestimmt wird gemäß

$$d_m = \frac{d_{max} + d_{min}}{2}$$

mit

$d_{max}$ = Durchmesser der Elementarzelle an der breitesten Stelle und
$d_{min}$ = Durchmesser der Elementarzelle an der schmalsten Stelle.

Die erfindungsgemäße inhärente Oberflächenstrukturierung ist so ausgebildet, daß sie mit Hilfe des Auflösevermögens des unbewaffneten menschlichen Auges nicht wahrnehmbar ist. Dies trifft insbesondere dann zu, wenn die Höhe h der Einzelerhebungen, gemessen von der Spitze der Erhebung bis zum Tal, im Mittel im Bereich von 0,001 $\mu$m < h < 2,0 $\mu$m liegt, vorzugsweise im Bereich von 0,01 $\mu$m < h < 0,8 $\mu$m.

Der morphologische Zustand des Polymeren ist das Ergebnis von mechanischen und thermischen Einwirkungen auf das Polymere. Erfindungsgemäß soll der morphologische Zustand des Polymeren im Bereich der Strukturierungen der Oberfläche der Folie gleich sein wie der des Polymeren im Innern der Folie. Das bedeutet, daß das Polymere im Bereich der Strukturierungen der Oberfläche der Folie im wesentlichen den gleichen mechanischen und thermischen Einflüssen unterworfen wird wie das Polymere im Innern der Folie. Gemessen wird der morphologische Zustand eines Polymeren mit Hilfe von röntgen- und elektronenmikroskopischen Untersuchungen.

Die Folie der vorstehend beschriebenen Art soll im wesentlichen frei sein von inerten Zusatzpartikeln, und sie soll auch bei einer Foliendicke von etwa 200 $\mu$m eine Trübung von < 3 % aufweisen. Das Merkmal »im wesentlichen frei von inerten Zusatzpartikeln« soll im Rahmen der Erfindung so verstanden werden, daß der Folie bzw. dem Kunststoff keine Zusatzpartikel zugesetzt werden sollen, wobei aber von dem Prozeß der Kunststoffherstellung herrührende Verunreinigungen in Spurenmengen nicht eigens entfernt werden sollen. Derartige Verunreinigungen können lösliche oder teilweise nicht lösliche Katalysatorreste oder Stabilisatoren sein, die in Konzentrationen vorliegen, deren Maximalwert 800 ppm, vorzugsweise 500 ppm, nicht überschreitet.

Die Trübung der Folie wird in Anlehnung an ASTM-D 1003-52 gemessen, wobei anstelle einer 4°-Lochblende eine 1°-Spaltblende eingesetzt und die Trübung in Prozent angegeben wird. Sie liegt beispielsweise bei einer 100 $\mu$m dikken,erfindungsgemäß hergestellten PET-Folie im Bereich zwischen 0,4 und 3 %, vorzugsweise zwischen 0,5 und 1 %.

Die Folie weist wegen ihrer inhärenten Oberflächenstrukturierung eine Gleitreibung auf, die ausreichend ist, um die Folie für den bestimmungsgemäßen Einsatzzweck verarbeitbar zu machen. Der Gleitreibungskoeffizient liegt im Bereich von 0,25 bis 0,7 und insbesondere im Bereich von 0,35 bis 0,55, gemessen gemäß DIN 53375 (Ausgabe November 1986), wobei das Reibungsverhalten der strukturierten Oberfläche gegen die nicht strukturierte Oberfläche gemessen wurde.

Die Erfindung betrifft auch ein Verfahren zur Herstellung der vorstehend beschriebenen Folie, nach dem der Kunststoff in einem Extruder plastifiziert, durch eine Düse zu einem Schmelzefilm ausgepreßt und auf einer Kühltrommel abgeschreckt wird, anschließend bei Temperaturen oberhalb des Glaspunktes biaxial orientiert und hitzefixiert wird. Die wenigstens einseitige Oberflächenstrukturierung der Folie erfolgt dabei unmittelbar vor der Streckorientierung der über Glastemperatur erwärmten Folie mittels einer lasergravierten Walze, die eine gleichmäßige Oberflächenstrukturierung besitzt. Eine solche lasergravierte Walze ist prinzipiell aus der DE-A-36 08 286 oder der EP-A-0 230 633 bekannt. Überraschend wurde gefunden, daß durch den Einsatz mindestens einer solchen Walze, die zusätzlich beheizt ist, bei der Folienherstellung, vorzugsweise im Bereich des Längsstreckwerkes, Folien mit den beschriebenen sehr vorteilhaften Oberflächenstrukturierungen erzielt werden können. Über eine Veränderung der Verfahrensbedingungen bei der Längs- und/oder Querstreckung (Temperatur, Streckverhältnis) und über die Temperatur der lasergravierten Walze lassen sich die Geometrie und die Ausprägung (Intensität) der Oberflächenstrukturierung gezielt einstellen. Die Strukturierung wird dadurch verstärkt, daß die Folie mit einer Anpreßwalze gegen die heiße lasergravierte Walze gepreßt wird.

Der Einbau einer oder mehrerer lasergravierter Walzen kann grundsätzlich an verschiedenen Orten (Stellen) erfolgen. Wird eine thermoplastische Folie beispielsweise im Längs-Querprozeß hergestellt, bietet sich der Einbau der lasergravierten Walze(n) im Längsstreckaggregat an. Hier sind viele Kombinationen des Einbaus denkbar, von denen einige angeführt werden:

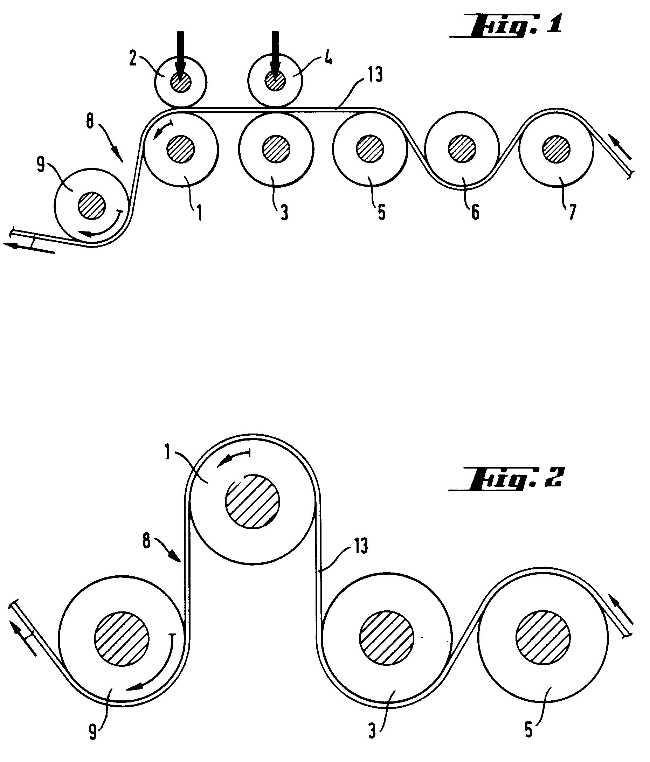

a) In dem in Figur 1 dargestellten Streckwerk mit Streckzone 8 ist die Streckwalze 1 lasergraviert, und die Folie 13 wird mit der Anpreßwalze 2 gegen die Streckwalze 1 gepreßt. Auf diese Weise erhält man eine einseitig strukturierte Folie 13. Ferner dargestellt in Figur 1 sind einige Vorwärmwalzen 3, 5, 6 und 7, eine weitere Anpreßwalze 4 und eine Kühlwalze 9.

b) Es ist auch denkbar, zusätzlich zu der in Figur 1 dargestellten lasergravierten Streckwalze 1 eine weitere Walze - in diesem Fall die Vorwärmwalze 6 - zu lasergravieren. Auf diese Weise erhält man eine beidseitig strukturierte Folie 13.

c) Ein anderes Streckwerk mit Streckzone 8 zeigt Figur 2. Bei dieser Darstellung ist die Besonderheit, daß die Streckwalze 1 von der Folie 13 mit einem größeren Umschlingungswinkel umgeben ist als bei der Streckwalze 1 in Figur 1, so daß in diesem Fall auf eine Anpreßwalze verzichtet werden kann. Ist eine einseitige Strukturierung der Folie 13 beabsichtigt, kann entweder die Vorwärmwalze 3 oder die Streckwalze 1 lasergraviert werden. Soll die Folie 13 beidseitig strukturiert werden, müssen beide Walzen 1 und 3 lasergraviert werden. In der Figur 2 sind weitere Kühlwalzen mit 9 und 14 bezeichnet.

Die Erfindung soll nachfolgend anhand der Ausführungsbeispiele und der von diesen hergestellten Mikrofotografien noch deutlicher erläutert werden.

Ausführungsbeispiel 1

Eine Polyethylenterephthalatschmelze, die ausschließlich Reste von Katalysatoren und Stabilisatoren enthält, aber keine zusätzlichen inerten Teilchen, und eine Intrinsicviskosität von 0,65 dl/g besaß, wurde auf einer Gießtrommel zu einer amorphen Folie extrudiert. Diese Folie wurde dann zwischen Rollen, die mit unterschiedlicher Umfangsgeschwindigkeit liefen, um das 2,2fache gestreckt. Das verwendete Streckaggregat ist in Figur 1 skizziert. An die Längsstreckung schloß sich eine Querstreckung um den Faktor 3,8 bei 95 °C an. Anschließend wurde die biaxial verstreckte Folie bei 205 °C thermofixiert. Die Endfoliendicke betrug 40 µm.

In Figur 1 stellt die Walze 1 die Streckwalze dar, von der die Folie 13 ablief und anschließend in Längsrichtung verstreckt wurde. Die Streckwalzentemperatur betrug 103 °C.

Die Walze besaß eine $Cr_2O_3$-Beschichtung. Die Walzenoberfläche war mit einem Laser derart behandelt worden, daß pro Quadratmillimeter der Oxidbeschichtung ca. 450 gleichmäßig große Schmelzenäpfchen aufgebracht worden waren. Gegen die dergestalt ausgeführte Streckwalze 1 wurde die vorgewärmte, unorientierte Folie 13 unmittelbar vor der Längsverstreckung mit einer Anpreßwalze 2 gepreßt.

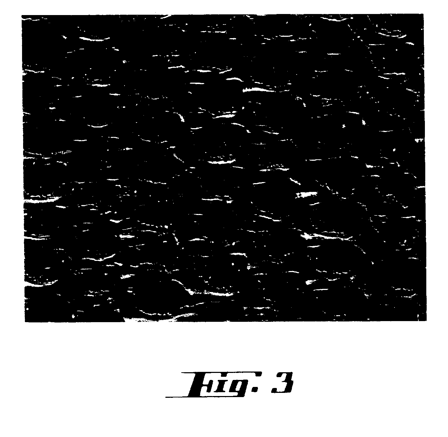

Figur 3 zeigt die Differential-Interferenz-Contrast-Mikroskop-Aufnahme (DIC) der strukturierten Folienseite bei 100facher Vergrößerung; es sind gut die regelmäßigen, immer wiederkehrenden "Elementarzellen" zu erkennen. Die Eigenschaften der nach diesem Ausführungsbeispiel hergestellten Folie 13 sind in der Tabelle angegeben.

Ausführungsbeispiel 2

Gegenüber dem Beispiel 1 wurde allein der Längsstreckfaktor variiert, er wurde auf 3,2 erhöht. Die Endfoliendicke betrug wieder 40 µm. Die sich hierbei ergebenden Folieneigenschaften sind in der Tabelle zusammengestellt.

Vergleichsbeispiel 1

Ausführungsbeispiel 1 wurde wiederholt, allerdings mit dem Unterschied, daß die mit Oxidkeramik beschichtete Streckwalze nicht lasergraviert war. Die Folieneigenschaften der nach diesem Beispiel hergestellten Folie sind der Tabelle zu entnehmen.

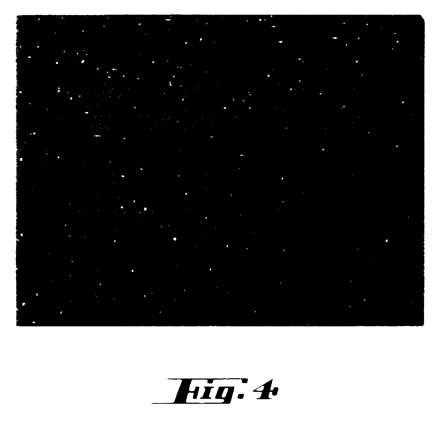

Figur 4 zeigt - analog zu Figur 3 - die DIC-Aufnahme der Oberfläche einer nach diesem Beispiel hergestellten Folie; abgesehen von kleinsten Unebenheiten (durch Stippen u.a.) sind keinerlei Strukturen auf der Folienoberfläche zu erkennen.

Vergleichsbeispiel 2

Als Abänderung der Einstellungen im Ausführungsbeispiel 1 wurde auf die Anpreßwalze 2 verzichtet. Die resultierenden Folieneigenschaften sind in der Tabelle zusammengestellt.

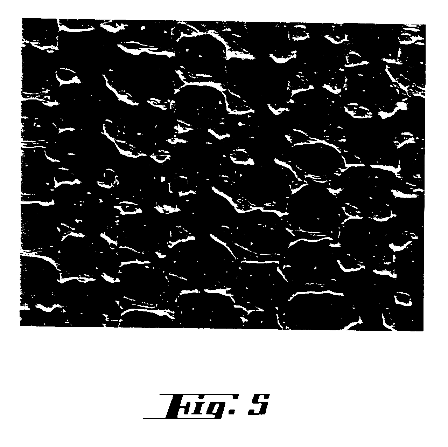

Figur 5 zeigt die DIC-Aufnahme der nach diesem Vergleichsbeispiel hergestellten Folie bei 100facher Vergrößerung. Im Vergleich zu Figur 3 ist eine weniger ausgeprägte und insbesondere weniger gleichmäßige Strukturierung der Folienoberfläche erkennbar.

Tabelle

| | Streckwalze lasergraviert | Anpreßwalze auf Streckwalze | Längsstreck-faktor | Gleitreibungsko-effizient | Trübung (%) | $R_a$ [1] c.o. = 0,08 mm (nm) |
|---|---|---|---|---|---|---|
| Ausführungsbeispiel 1 | ja | ja | 2,2 | 0,35-0,45 | 0,6-0,7 | 12 |
| Ausführungsbeispiel 2 | ja | ja | 3,2 | 0,40-0,60 | 0,6-0,7 | 10 |
| Vergleichsbeispiel 1 | nein | ja | 2,2 | totales Blocken | 0,5 | 4 |
| Vergleichsbeispiel 2 | ja | nein | 2,2 | stark schwankend 0,4-1,0 | 0,5-0,7 | stark schwank-end 8-12 |

[1] Der Rauhigkeitskennwert $R_a$ wurde mit einem Gerät der Firma Hommelwerke GmbH, D-7730 Villingen-Schwenningen (Elektronikeinheit: Typ T20S/Taster: Typ TKE100-2864) nach DIN 4768 bestimmt.

Wie aus dem Vergleichsbeispiel 1 der Tabelle hervorgeht wird die Folie 13 bei Verwendung einer nicht lasergravierten Streckwalze an letzterer nicht strukturiert; dadurch besitzt sie relativ niedrige Rauhigkeitswerte und ein unzulängliches Gleitverhalten (Blocken).

Vergleichsbeispiel 2 zeigt, daß die Folie 13 bei einer Folienführung entsprechend Figur 1 ohne Verwendung einer Anpreßwalze, die die Folie gegen die lasergravierte Walze pressen würde, nicht optimal gleichmäßig strukturiert wird. Dies führt zu stark schwankenden Gleitreibungs- und Rauhigkeitswerten, und es kommt temporär zu einem Verblocken zweier Folienlagen in der Art, wie es bei Folien, die entsprechend Vergleichsbeispiel 1 produziert worden sind, immer auftritt.

## Patentansprüche

1. Biaxial streckorientierte und hitzefixierte, transparente Folie aus thermoplastischem Kunststoff, die auf wenigstens einer ihrer Oberflächen eine Oberflächenrauhigkeit $R_a$ von größer als 0,003 $\mu$m aufweist, dadurch gekennzeichnet, daß sie im wesentlichen frei ist von inerten Zusatzpartikeln und eine Oberflächenrauhigkeit von bis zu 0,080 $\mu$m aufweist, die durch eine Strukturierung der Folienoberfläche bestehend aus die Folie bildendem Polymeren hervorgerufen wird, wobei das Polymere im Bereich der Strukturierung im wesentlichen den gleichen morphologischen Zustand aufweist wie das Polymere im Innern der Folie selbst.

2. Folie nach Anspruch 1, dadurch gekennzeichnet, daß das thermoplastische Polymere als Hauptbestandteil Polyester, vorzugsweise Polyethylenterephthalat, enthält.

3. Folie nach Anspruch 1 oder 2, dadurch gekennzeichnet, daß ihre Oberflächenrauhigkeit im Bereich von 0,005 bis 0,080 $\mu$,m, vorzugsweise im Bereich von 0,007 bis 0,025 $\mu$m, liegt.

4. Folie nach einem der Ansprüche 1 bis 3, dadurch gekennzeichnet, daß ihre Oberflächenrauhigkeit im wesentlichen durch aus der Folienebene herausragende integrale Erhebungen bestehend aus die Folie bildendem Polymermaterial von im wesentlichen gleichförmiger Konfiguration gebildet wird und daß die Höhe h der Erhebungen, gemessen von der Spitze der Erhebung bis zum Tal, im Bereich von

$$0,001 \ \mu m < h < 2,0 \ \mu m$$

liegt, vorzugsweise im Bereich von

$$0,01 \ \mu m < h < 0,8 \ \mu m.$$

5. Folie nach einem der Ansprüche 1 bis 4, dadurch gekennzeichnet, daß die aus der Folienebene herausragenden integralen Erhebungen durch immer wiederkehrende und als gleich identifizierbare Elementarzellen hervorgerufen werden.

6. Folie nach einem der Ansprüche 1 bis 5, dadurch gekennzeichnet, daß der mittlere Durchmesser $d_m$ der Elementarzellen im Bereich von 10 bis 800 μm liegt, vorzugsweise von 20 bis 300 μm.

7. Folie nach einem der Ansprüche 1 bis 6, dadurch gekennnzeichnet, daß die Trübung einer bis zu 200 μm dicken Folie unter 3 % liegt, vorzugsweise im Bereich zwischen 0,4 und 3 %, besonders bevorzugt zwischen 0,5 und 1 %.

8. Folie nach einem der Ansprüche 1 bis 7, dadurch gekennzeichent, daß ihr Gleitreibungskoeffizient im Bereich von 0,25 bis 0,7, vorzugsweise im Bereich von 0,35 bis 0,55, liegt.

9. Verfahren zur Herstellung einer Folie nach einem der Ansprüche 1 bis 8, bei dem der Kunststoff in einem Extruder plastifiziert, durch eine Düse zu einem Schmelzefilm ausgepreßt und auf einer Kühltrommel abgeschreckt wird, anschließend bei Temperaturen oberhalb des Glaspunktes biaxial orientiert und hitzefixiert wird, dadurch gekennzeichnet, daß die wenigstens einseitige Oberflächenstrukturierung der Folie unmittelbar vor der Streckorientierung der über Glastemperatur erwärmten Folie mittels einer lasergravierten Walze vorgenommen wird, die eine gleichmäßige Oberflächenstrukturierung besitzt.

10. Verfahren nach Anspruch 9, dadurch gekennzeichnet, daß die lasergravierte Walze beheizt ist.

11. Verfahren nach Anspruch 10, dadurch gekennzeichnet, daß die Folie mit einer Anpreßwalze gegen die beheizte, lasergravierte Walze gepreßt wird.

**Claims**

1. Biaxially stretch-oriented and heat-set, transparent film made of a thermoplastic plastics material, which on at least one surface has a peak-to-valley height $R_a$ of more than 0.003 μm, characterized in that it is essentially free of inert additive particles and has a peak-to-valley height of up to 0.080 μm which is caused by an integral texturing of the film surface resulting from the polymers constituting the film, whereby the polymer in the area of the texturing essentially is in the same morphological state as the polymer in the interior of the film.

2. The film as claimed in claim 1, characterized in that the main constituent of the thermoplastic polymer is polyester, preferably polyethylene terephthalate.

3. The film as claimed in claim 1 or 2, characterized in that its peak-to-valley height is in the range of 0.005 to 0.080 μm, preferably in the range of 0.007 to 0.025 μm.

4. The film as claimed in any of claims 1 to 3, characterized in that its superficial roughness is essentially the result of integral elevations rising from the film plane, said elevations being formed by polymer material constituting the film and being of essentially uniform configuration, and in that the height h of the elevations, measured from the peak of said elevations to the valley, is in the range of 0.001 μm < h < 2.0 μm, preferably in the range of 0.01 μm < h < 0.8 μm.

5. The film as claimed in any of claims 1 to 4, characterized in that said integral elevations rising from the film plane are caused by recurring unit cells which can be identified as being of the same type.

6. The film as claimed in any of claims 1 to 5, characterized in that the mean diameter $d_m$ of the unit cells is in the range of 10 to 800 μm, preferably in the range of 20 to 300 μm.

7. The film as claimed in any of claims 1 to 6, characterized in that the haze of a film having a thickness of up to 200 μm is less than 3%, preferably in the range of 0.4 to 3%, particularly preferably in the range of 0.5 to 1%.

8. The film as claimed in any of claims 1 to 7, characterized in that its coefficient of friction is in the range of 0.25 to 0.7, preferably of 0.35 to 0.55.

9. A process for producing a film as claimed in any of claims 1 to 8, which comprises plastifying the plastics material in an extruder, extruding it through a die into a melt film, chilling said melt film on a chilling drum, then orienting said film biaxially at a temperature above the glass transition temperature and heat-setting the resulting film, characterized in that the at least single-sided superficial texturing of the film is performed immediately before stretch-orienting the film heated to a temperature above its glass transition temperature, by means of a laser-engraved roller having a uniform surface texturing.

**10.** The process as claimed in claim 9, characterized in that the laser-engraved roller is heated.

**11.** The process as claimed in claim 10, characterized in that the film is pressed against the heated, laser-engraved roller by means of a contact roller.

## Revendications

**1.** Feuille transparente orientée par étirement et fixée thermiquement, en matière thermoplastique, qui présente sur au moins une de ses surfaces une rugosité de surface $R_a$ de plus de 0,003 µm,
caractérisée en ce qu'elle est essentiellement exempte de particules d'additif inertes et qu'elle présente une rugosité de surface de 0,080 µm au maximum, qui est provoquée par une structuration de la surface de la feuille constituée de polymères formant la feuille, le polymère dans la zone de structuration présentant essentiellement le même état morphologique que le polymère à l'intérieur de la feuille elle-même.

**2.** Feuille selon la revendication 1, caractérisée en ce que le polymère thermoplastique contient comme constituant principal du polyester, de préférence du polytéréphtalate d'éthylène.

**3.** Feuille selon la revendication 1 ou 2, caractérisée en ce que sa rugosité de surface est située dans la gamme de 0,005 à 0,080 µm, de préférence dans la gamme de 0,007 à 0,025 µm.

**4.** Feuille selon l'une des revendications 1 à 3,
caractérisée en ce que sa rugosité de surface est formée par des aspérités venues de matière sortant de la surface de la feuille constituées du matériau polymère constituant la feuille de configuration essentiellement uniforme et en ce que la hauteur h des aspérités, mesurée du sommet de l'aspérité jusqu'à la base, est dans le domaine de

$$0,001 \ \mu m < h < 2,0 \ \mu m,$$

de préférence dans le domaine de

$$0,01 \ \mu m < h < 0,8 \ \mu m.$$

**5.** Feuille selon l'une des revendications 1 à 4,
caractérisée en ce que les aspérités venues de matières qui dépassent du plan de la feuille sont provoquées par des cellules élémentaires toujours répétées et identifiables comme identiques.

**6.** Feuille selon l'une des revendications 1 à 5,
caractérisée en ce que le diamètre moyen $d_m$ des cellules élémentaires est situé dans le domaine de 10 à 800 µm, de préférence de 20 à 300 µm.

**7.** Feuille selon l'une des revendications 1 à 6,
caractérisée en ce que le trouble d'une feuille d'épaisseur de 200 µm au maximum est inférieur à 3%, est de préférence dans la gamme comprise entre 0,4 et 3%, de manière particulièrement préférée entre 0,5 et 1%.

**8.** Feuille selon l'une des revendications 1 à 7,
caractérisée en ce que son coefficient de frottement de glissement est situé dans la gamme comprise entre 0,25 et 0,7, de préférence dans la gamme comprise entre 0,35 et 0,55.

**9.** Procédé de fabrication d'une feuille selon l'une des revendications 1 à 8 dans lequel la matière plastique est plastifiée dans une extrudeuse, est pressée en un film fondu à travers une filière et est étirée sur un tambour de refroidissement, puis orientée biaxialement à des températures au-dessus du point de transition vitreuse et fixée thermiquement,
caractérisé en ce que l'on réalise la structuration de la surface au moyen d'un cylindre gravé au laser sur au moins une face directement avant l'orientation par étirement de la feuille chauffée au-dessus du point de transition vitreuse, cylindre qui possède une structure de surface uniforme.

**10.** Procédé selon la revendication 9, caractérisé en ce que le cylindre gravé au laser est chauffé.

**11.** Procédé selon la revendication 10, caractérisé en ce que la feuille est pressée par un cylindre presseur contre le cylindre chauffé gravé au laser.

Fig. 1

Fig. 2

Fig. 3

*Fig. 4*

Fig. 5